# EUROPÄISCHE PATENTSCHRIFT

(11) **EP 1 873 572 B1**
(45) Veröffentlichungstag und Bekanntmachung des Hinweises auf die Patenterteilung: **14.04.2010**
(21) Anmeldenummer: 07011849.2
(22) Anmeldetag: 16.06.2007
(51) Int. Cl.: H04B 10/105

(54) **Vorrichtung zur Übertragung optischer Signale**
Device for transmitting optical signals
Dispositif destiné à la transmission de signaux optiques

(30) Priorität: 29.06.2006 DE 102006030421
(43) Veröffentlichungstag der Anmeldung: 02.01.2008
(73) Patentinhaber: Carl Zeiss Optronics GmbH, 73447 Oberkochen (DE)
(72) Erfinder: Theis, Martin Dr., 73430 Aalen (DE); Sand, Rolf Dr., 73447 Oberkochen (DE); Gängler, Dietmar Dipl.-Phys., 89129 Langenau (DE); Schymik, Carsten Dipl.-Ing.(FH), 73432 Aalen (DE)
(74) Vertreter: Lorenz, Markus

(56) Entgegenhaltungen:
- DE-C1- 3 929 549
- GB-A- 389 773

## Beschreibung

Die Erfindung betrifft eine Vorrichtung zur Übertragung, insbesondere zum Senden und Empfangen optischer Signale. Eine verbreitete Möglichkeit zur Übertragung von Signalen über große Distanzen besteht darin, von einer Sendeeinheit ein optisches Signal über mindestens eine optische Baugruppe freioptisch zu einer von der Sendeeinheit beabstandeten Empfangseinheit zu übermitteln, wo das ankommende Licht mittels mindestens einer weiteren optischen Baugruppe auf einen Empfänger gelenkt und detektiert wird. Ein Vorteil der Verwendung optischer Signale besteht dabei darin, dass sich aufgrund der geringen Wellenlänge der optischen Strahlung und der damit verbundenen hohen Frequenz im Vergleich zu beispielsweise Radiowellen eine Übertragung mit erheblich höheren Datenraten realisieren lässt. Darüber hinaus gewährleisten die Ausbreitungseigenschaften der verwendeten optischen Strahlung, deren Wellenlänge üblicherweise im nahen Infrarot liegt, eine geringe Ablenkung des zur Übertragung verwendeten Sendestrahls und damit die Realisation einer vergleichsweise robusten Kommunikationsverbindung.

Zur Konditionierung, also zur Formung bzw. Umlenkung der von der jeweiligen Sendeeinheit ausgesandten optischen Strahlung werden üblicherweise optische Baugruppen wie beispielsweise Kollimatoren, Okulare und Teleskope verwendet, die der Lichtstrahl auf seinem Weg zu der freioptischen Übertragungsstrecke passiert. Da die verwendeten Vorrichtungen zur Übertragung optischer Signale in der Regel sowohl über eine Sende- als auch über eine Empfangseinheit verfügen, besteht eine übliche Maßnahme darin, einzelne optische Baugruppen, wie beispielsweise ein Teleskop, sowohl für die Sendeinheit zur Strahlkonditionierung als auch für die Empfangseinheit zur Fokussierung des empfangenen Lichtstrahls zu verwenden. Diese Maßnahme beinhaltet jedoch die Problematik, dass bei einem gleichzeitigen Sende- und Empfangsbetrieb der Vorrichtung in den verwendeten Baugruppen, insbesondere an deren Grenzflächen, Rückreflexe entstehen, welche die eigene Empfangseinheit der momentan sendenden Vorrichtung erreichen und sich dort störend auswirken. Üblicherweise wird dieser Problematik dadurch begegnet, dass die Grenzflächen der verwendeten optischen Elemente vergütet, d. h. mit reflexmindernden Schichten versehen werden, wodurch sich die Intensität der entstehenden Rückreflexe wesentlich verringern lässt. Insbesondere bei einer beabsichtigten Übertragung über große Distanzen, beispielsweise im Bereich mehrerer tausend Kilometern wie z. B. im Fall einer Verbindung zweier Satelliten im Weltraum, wird die genannte Problematik jedoch dadurch verschärft, dass die zu empfangenden Signale die Empfangseinheit nur stark abgeschwächt erreichen und damit die Intensität der unerwünschten Rückreflexe in der Größenordnung der Intensität der erwünschten zu empfangenden Signale liegt. Allein durch die Vergütung der optischen Elemente lässt sich dieser Effekt somit nicht mit hinreichender Wirksamkeit unterdrücken.

Aus der deutschen Patentschrift DE 39 29 549 C1 ist eine Vorrichtung zur Minderung von Störungen in optischen Systemen bekannt, bei der mittels eines Zeitfenster-Diskriminators im Detektor während bestimmter Zeitfristen gesperrt wird.

Daneben ist in der britischen Patentschrift GB 389 773 ein Teleskop offenbart, bei dem mittels einer diffus streuenden Fläche bedarfsweise störende Lichtreflexe unterdrückt werden sollen.

Es ist damit Aufgabe der vorliegenden Erfindung, eine Vorrichtung zur Übertragung optischer Signale zu schaffen, in der die oben genannten störenden Rückreflexe wirksam unterdrückt werden.

Diese Aufgabe wird durch die Vorrichtung mit den im Anspruch 1 angegebenen Merkmalen gelöst; die Unteransprüche betreffen vorteilhafte Weiterbildungen und Varianten der Erfindung.

Die Vorrichtung zur Übertragung optischer Signale zeigt eine optische Sendeeinheit sowie mindestens eine optische Baugruppe zur Konditionierung eines von der Sendeeinheit ausgesandten Lichtstrahls. Dabei weist die Vorrichtung Mittel auf, die es gestatten, die Intensität des Lichtstrahls im Bereich einer optischen Achse der Vorrichtung abzuschwächen. Mit anderen Worten wird eine Abdunklung des ausgesandten Lichtstrahls in seinem zentralen Bereich vorgenommen. Insbesondere in diesem Bereich, also in der Nähe der optischen Achse der Vorrichtung, besitzen die verwendeten optischen Elemente Grenzflächen, die im Wesentlichen orthogonal zur optischen Achse verlaufen. Damit würden an den Grenzflächen in diesem Bereich entstehende Rückreflexe praktisch direkt in den Empfänger zurückreflektiert, sofern die betreffenden optischen Elemente in der Vorrichtung sowohl in Sende- als auch in Empfangsrichtung betrieben werden. Somit hat die Abschwächung der Intensität des Lichtstrahls im Bereich der optischen Achse den Vorteil, dass gerade diejenigen Bereiche des von der Sendeeinheit ausgesandten Lichtstrahls, die das höchste Potenzial zeigen, störende Rückreflexe zu erzeugen, ausgeblendet werden.

Erfindungsgemäß umfasst die Vorrichtung eine Empfangseinheit und einen Strahlteiler, der die Lichtwege in der Vorrichtung unterteilt in
- einen ersten Teillichtweg, der ausschließlich von durch die Sendeeinheit (1) ausgesendetem Licht durchlaufen wird
- einen zweiten Teillichtweg, der ausschließlich von durch die Empfangseinheit (10) zu empfangendem Licht durchlaufen wird
- und einen dritten Teillichtweg, der sowohl von durch die Empfangseinheit (10) zu empfangendem Licht als auch von durch die Sendeeinheit (1) ausgesendetem Licht durchlaufen wird, wobei sich Mittel(24,25) zur Abschwächung der Intensität des Lichtstrahls (12) im ersten Teillichtweg befinden.

Der Grad der Abschwächung der Intensität des Lichtstrahls im Bereich der optischen Achse kann dabei unterschiedlich hoch sein. Insbesondere kann die Intensität des Lichtstrahls im Bereich der optischen Achse soweit abgeschwächt werden, dass die Lichtintensität in den Bereichen des Lichtstrahles, die sich in der Nähe der optischen Achse befinden, geringer ist als die Intensität in den Bereichen des Lichtstrahls, die von der optischen Achse weiter beabstandet sind. Prinzipiell ist es auch denkbar, die Intensität in den Bereichen in der optischen Achse gegenüber der von der Lichtquelle emittierten Intensität abzuschwächen, ohne dass notwendigerweise die Lichtintensität in der Nähe der optischen Achse geringer ist als die Intensität in den von der optischen Achse weiter beabstandeten Bereichen. Der letztgenannte Fall kann beispielweise dann eintreten, wenn die Sendeeinheit einen Lichtstrahl mit einem in radialer Richtung gaussförmigen Intensitätsprofil emittiert - auch eine Abflachung des gaussförmigen Intensitätsprofils in der Nähe des Maximums der Gausskurve und damit in der Nähe der optischen Achse würde den gewünschten Effekt grundsätzlich bewirken.

In einer ersten vorteilhaften Variante der Erfindung wird eine der genannten optischen Baugruppen zur Konditionierung des von der Sendeeinheit ausgesandten Lichtstrahls durch einen Kollimator gebildet. Die Wirkungsweise des Kollimators besteht dabei darin, dass er mittels einer Anordnung mehrerer Linsen als optische Elemente den üblicherweise aus einer Sendefaser austretenden Lichtstrahl aufweitet und ein paralleles Lichtbündel mit einem definierten Durchmesser und in der Regel einem gaußförmigen Intensitätsverlauf erzeugt. Eine wirksame Möglichkeit zur Abschwächung der Intensität des Lichtstrahls im Bereich der optischen Achse des Kollimators besteht nun darin, die optischen Elemente oder zumindest eines der optischen Elemente des Kollimators im Bereich der optischen Achse mit einer reflektierenden Schicht als Mittel zur Abschwächung der Intensität des den Kollimator passierenden Lichtstrahls zu versehen, so dass die Intensität des Lichtstrahls im Bereich der optischen Achse des Kollimators durch Reflexion vermindert wird. Dabei macht man sich die Tatsache zunutze, dass sich der Kollimator ausschließlich im Sendepfad der Vorrichtung zur Übertragung optischer Signale befindet, so dass die durch die reflektierende Schicht erzeugten Rückreflexe lediglich auf die Sendeeinheit zurückfallen, wo sie keinerlei störenden Effekt hervorrufen. Auf diese Weise lässt sich die Intensität des Lichtstrahls bereits vor seinem Eintritt in optische Baugruppen, die sich im Empfangsteil der Vorrichtung befinden, abschwächen. Alternativ oder zusätzlich kann auch vorgesehen sein, die Sendefaser in der Weise zu wählen, dass das in ihr geführte Licht hinsichtlich seiner Modenstruktur in der Weise beschaffen ist, dass der Lichtstrahl bereits bei seinem Austritt aus der Sendefaser die gewünschte radiale Intensitätscharakteristik zeigt. Dies lässt sich auch durch die Verwendung einer entsprechend gewählten Lichtquelle mit einer angepassten Modenstruktur, beispielsweise eines vertikal emittierenden Halbleiterlasers (VCSEL), unterstützen. Alternativ oder zusätzlich kann im Kollimator die Intensitätsverteilung des Lichtes durch ein diffraktives Element (DOE) in der Weise geändert werden, dass lediglich eine ringförmige Ausleuchtung entsteht. Diese Maßnahme hat den Vorteil, dass durch sie gesamte eingestrahlte Intensität weniger abgeschwächt wird als durch Reflexion an reflektierenden Schichten.

Die Erzielung des gewünschten Effekts in den optischen Baugruppen der Vorrichtung, die sowohl zur Konditionierung des ausgesendeten Lichtstrahls als auch zur Fokussierung des empfangenen Lichtstrahls verwendet werden, sind andere Maßnahmen erforderlich, da eine Reflexion in Richtung der Empfangseinheit in diesen Baugruppen unter allen Umständen zu vermeiden ist. Eine vorteilhafte Vorgehensweise hierzu besteht beispielsweise darin, bei der Verwendung eines Sende-/Empfangsteleskops mit Okular ein lichtabsorbierendes optisches Element als Mittel zur Abschwächung der Intensität des Lichtstrahls im Bereich der optischen Achse mindestens eines der optischen Elemente des Okulars anzuordnen. Als lichtabsorbierendes Element kann in vorteilhafter Weise eine sogenannte Lichtfalle verwendet werden. Unter einer Lichtfalle wird dabei ein optisches Bauteil verstanden, in dem einfallendes Licht durch Reflexion an bzw. Absorption in unter bestimmten Winkeln zueinander angeordneten Prismen/Kegeln besonders wirksam abgeschwächt wird. Als einfache Variante kommt auch eine Schwärzung der genannten Bereiche der optischen Elemente in Betracht; in diesem Fall ist jedoch das Risiko der Rückreflexion von Streulicht in Richtung der Empfangseinheit vergleichsweise höher.

Die vorgeschaltete Abschwächung der Intensität des Lichtstrahls im Kollimator hat dabei den Effekt, dass eine Schädigung der Lichtfalle oder das Auftreten thermischer Spannungen vermieden wird, da ein Großteil der Intensität des von der Sendeeinheit emittierten Lichtes die Lichtfalle nicht erreicht und damit in dieser nicht absorbiert werden muss.

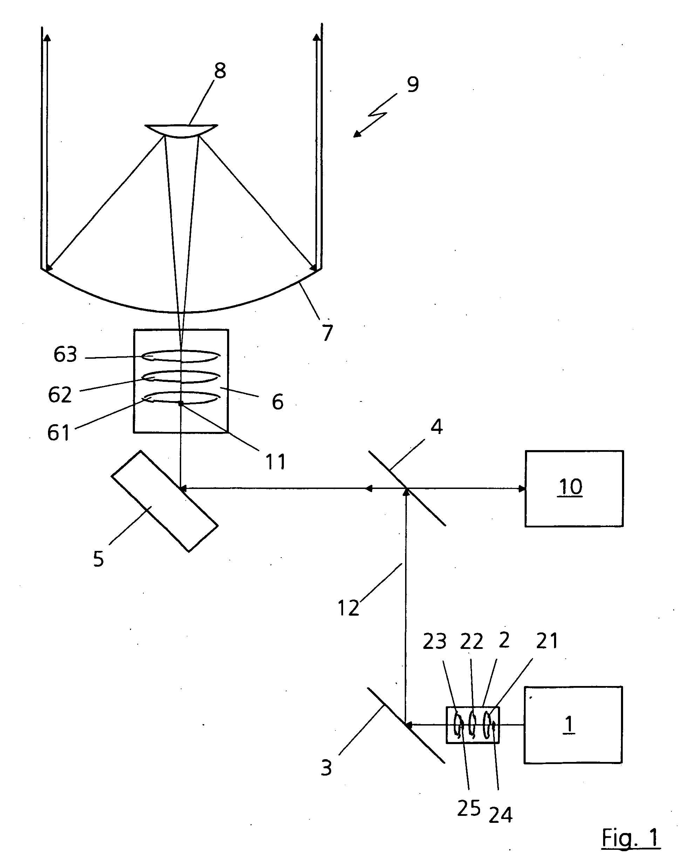

Nachfolgend wird anhand der einzigen Figur 1 ein Ausführungsbeispiel der Erfindung exemplarisch erläutert.

Figur 1 zeigt eine beispielhafte Vorrichtung zur Übertragung optischer Signale mit einer optischen Sendeeinheit 1, einem Kollimator 2 als optische Baugruppe zur Konditionierung eines von der Sendeeinheit 1 ausgesandten Lichtstrahls 12, einem Umlenkspiegel 3 sowie einem Polarisationsteiler 4. Ferner weist die Vorrichtung zur Übertragung optischer Signale den zweiten Umlenkspiegel 5, das Okular 6 sowie das Cassegrain-Teleskop 9 mit den beiden Spiegeln 8 und 7 auf.

Bei einem Cassegrain-Teleskop fällt das einfallende Licht zunächst auf einen konkav-parabolischen Hauptspiegel (im vorliegenden Beispiel der erste Teleskopspiegel 7. Dieser reflektiert das Licht zu einem konvex-hyperbolischen Fangspiegel, im vorliegenden Beispiel zu dem zweiten Teleskopspiegel 8. Dieser ist so angeordnet, dass sein konkaver Brennpunkt mit dem des ersten Teleskopspiegels 7 übereinstimmt. Der konvexe Brennpunkt zeigt in Richtung des ersten Teleskopspiegels 7. Der zweite Teleskopspiegel 8 verlängert dabei die Brennweite und ermöglicht eine kompakte Bauform der Anordnung.

Zum Empfang von über das Teleskop 9 einfallender Strahlung enthält die gezeigte Vorrichtung eine Empfangseinheit 10. Während des Betriebes der dargestellten Vorrichtung sendet die optische Sendeeinheit 1, beispielsweise ein Halbleiterlaser, mit einer Emissionswellenlänge von ca. 1.064 nm und einer Leistung von ca. 2W. Selbstverständlich sind auch andere Emissionswellenlängen denkbar, die für die jeweilige Anwendung geeignet sind, insbesondere auch 1550 nm. Der ausgesandte Lichtstrahl 12 tritt zunächst in den Kollimator 2 mit den Linsen 21, 22, 23 ein, wo er auf einen Durchmesser von ca. 12 mm aufgeweitet wird. Bereits im Kollimator 2 wird die Intensität des Lichtstrahls 12 im Bereich der optischen Achse geschwächt. Hierzu ist im Strahlengang des Kollimators 2 der Linse 21 das diffraktive Element 24 vorgelagert, das beispielsweise als Beugungsgitter realisiert sein kann. Durch die Beugung an dem diffraktiven Element 24 wird die Intensität des Lichtstrahls 12 aus den der optischen Achse benachbarten Bereichen in achsenfernere Bereiche umgelenkt.

Im weiteren Verlauf des Strahlenganges durch den Kollimator 2 befindet sich das optische Element 23, das im Bereich seiner optischen Achse die Verspiegelungsschicht 25 aufweist, die das Licht im zentralen Bereich des von der Sendeeinheit 1 ausgesandten Lichtstrahls 12 in Richtung der Sendeeinheit 1 zurückreflektiert. In diesem Teil der Anordnung ist eine Reflexion unkritisch, da das an der Verspiegelungsschicht 25 reflektierte Licht nicht die Empfangseinheit 10 erreichen kann und damit auch nicht zu Störungen führt. Selbstverständlich ist es auch denkbar, die Verspiegelungsschicht 24 auf einer der anderen im Kollimator 2 angeordneten Linsen 21 oder 22 anzuordnen, entscheidend ist lediglich, dass der den Kollimator 2 verlassende Lichtstrahl 12 in seinem der optischen Achse der Vorrichtung am nächsten liegenden Bereich abgeschwächt ist. Dabei kann der Bereich, in dem der Lichtstrahl 12 abgeschwächt ist, einen Durchmesser von ca. 2mm besitzen.

Nach dem Austritt aus dem Kollimator 2 gelangt der Lichtstrahl 12 auf den Umlenkspiegel 3, wo er in Richtung des Polarisationsteilers 4 umgeleitet wird. Der Polarisationsteiler 4 weist polarisationsabhängige Reflexionseigenschaften auf, d. h. auf ihn einfallendes Licht wird in Abhängigkeit seiner Polarisation zur Einfallsebene entweder reflektiert oder transmittiert, d. h. in Richtung des Empfängers 10 durchgelassen. Im vorliegenden Beispiel ist der von der Sendeeinheit 1 emittierte Lichtstrahl 12 linear in der Weise polarisiert, dass es nach dem Durchgang durch den Kollimator 2 und der Umlenkung an dem Umlenkspiegel 3 an dem Polarisationsteiler 4 vollständig in Richtung des zweiten Umlenkspiegels 5 reflektiert wird. Der zweite Umlenkspiegel 5 lenkt den Lichtstrahl 12 in Richtung des Okulars 6 des Cassegrain-Teleskops 9 ab. Im vorliegenden Beispiel weist das Okular 6 die Linsen 61, 62 und 63 auf, dabei ist die in Richtung des Lichtstrahls 12 erste Linse 61 im Bereich ihrer optischen Achse mit der Lichtfalle 11 versehen, in der eine nahezu vollständige Absorption des in diesen Bereich einfallenden Lichtes erfolgt. Der besondere Vorteil der dargestellten Konfiguration liegt dabei darin, dass sich die Lichtfalle 11 in der in Strahlrichtung ersten Linse 61 befindet, dadurch wird erreicht, dass bereits vor dem Erreichen weiterer gegebenenfalls reflektierender Grenzflächen im Okular 6 die Intensität des einfallenden Lichtstrahls 12 im Bereich seiner optischen Achse weiter wirksam abgeschwächt wird. Allerdings kann es von Vorteil sein, im Verlauf des Okulars beispielsweise in der Linse 63 eine weitere Lichtfalle vorzusehen, um die Wahrscheinlichkeit von Rückreflexen, die von nicht achsenparallelen Lichtstrahlen herrühren, weiter zu reduzieren. Die Lichtfallen können dabei einen Durchmesser im Bereich von ca. 2 mm aufweisen. Nach dem Verlassen des Okulars 6 tritt der so konditionierte Lichtstrahl 12 durch eine Öffnung im ersten Spiegel 7 des Cassegrain-Teleskops 9 in dieses ein, wird an dem zweiten Spiegel 8 des Cassegrain-Teleskops 9 in Richtung des ersten Spiegels 7 des Cassegrain-Teleskops 9 zurückreflektiert und verlässt das Teleskop 9 als aufgeweitetes, näherungsweise paralleles Lichtbündel in Richtung einer nicht dargestellten Sende-/Empfangsvorrichtung, mit der ein Datenaustausch erfolgen soll.

Ein von der nicht dargestellten Sende-/Empfangsvorrichtung ausgesandter einfallender ebenfalls nicht dargestellter Lichtstrahl trifft umgekehrt zunächst auf den ersten Spiegel 7 des Cassegrain-Teleskops 9, von wo aus er auf den zweiten Spiegel 8 des Cassegrain-Teleskops 9 abgelenkt wird und nachfolgend durch das Okular 6 und den Umlenkspiegel 5 auf den Polarisationsteiler 4 gelangt. Dabei ist die Polarisation des einfallenden Lichtstrahles so gewählt, dass der Lichtstrahl den Polarisationsteiler 4 passiert und nachfolgend auf die Empfangseinheit 10 gelangt, wo er detektiert wird. Aufgrund der gegenüber dem Durchmesser des zum empfangenden Lichtstrahles kleinen Ausdehnung der zur Abschwächung der Intensität des Lichtstrahles im Bereich der optischen Achse verwendeten Lichtfallen 11 wird die Intensität des erwünschten zu empfangenden Lichtes, das die Empfangseinheit 10 erreicht, nicht wesentlich gemindert.

Ein besonderer Vorteil der dargestellten Anordnung liegt dabei darin, dass die Abschwächung der Intensität des Lichtstrahls 12 im Bereich der optischen Achse durch eine Kombination verschiedener Elemente erreicht wird, so dass Störungen der Empfangseinheit 10 durch rückreflektiertes Falschlicht wirksam vermieden werden.

## Patentansprüche

1. Vorrichtung zur Übertragung optischer Signale, mit einer optischen Sendeeinheit (1) sowie mindestens einer optischen Baugruppe (2,3,4,5,6,9) zur Konditionierung eines von der Sendeeinheit (1) ausgesandten Lichtstrahls (12), wobei die Vorrichtung Mittel (11,24,25) zur Abschwächung der Intensität des Lichtstrahls (12) im Bereich einer optischen Achse der Vorrichtung aufweist, **dadurch gekennzeichnet, dass** die Vorrichtung eine Empfangseinheit (10) umfasst, und dass ein Strahlteiler (4) vorhanden ist, der die Lichtwege in der Vorrichtung unterteilt in
- einen ersten Teillichtweg, der ausschließlich von durch die Sendeeinheit (1) ausgesendetem Licht durchlaufen wird
- einen zweiten Teillichtweg, der ausschließlich von durch die Empfangseinheit (10) zu empfangendem Licht durchlaufen wird
- und einen dritten Teillichtweg, der sowohl von durch die Empfangseinheit (10) zu empfangendem Licht als auch von durch die Sendeeinheit (1) ausgesendetem Licht durchlaufen wird, wobei sich Mittel(24,25) zur Abschwächung der Intensität des Lichtstrahls (12) im ersten Teillichtweg befinden.

2. Vorrichtung nach Anspruch 1, **dadurch gekennzeichnet, dass** die Vorrichtung in Richtung des von der Sendeeinheit (1) ausgesandten Lichtstrahls (12) als optische Baugruppe einen Kollimator (2) zur Strahlaufweitung umfasst.

3. Vorrichtung nach Anspruch 1 oder 2, **dadurch gekennzeichnet, dass** die Vorrichtung in Richtung des von der Sendeeinheit (1) ausgesandten Lichtstrahls (12) ein Okular (6) umfasst.

4. Vorrichtung nach Anspruch 2, **dadurch gekennzeichnet, dass** es sich bei einem Mittel (11,24,25) zur Abschwächung der Intensität des Lichtstrahls (12) um eine reflektierende Schicht (25) im Bereich der optischen Achse mindestens eines optischen Elementes (21,22,23) des Kollimators (2) handelt.

5. Vorrichtung nach Anspruch 3, **dadurch gekennzeichnet, dass** es sich bei einem Mittel (11,24,25) zur Abschwächung der Intensität des Lichtstrahls (12) um ein lichtabsorbierendes optisches Element (11) im Bereich der optischen Achse mindestens eines optischen Elementes (61,62,63) des Okulars (6) handelt.

6. Vorrichtung nach Anspruch 5, **dadurch gekennzeichnet, dass** es sich bei dem lichtabsorbierenden Element (11) um eine Lichtfalle handelt.

7. Vorrichtung nach einem der Ansprüche 2 bis 6, **dadurch gekennzeichnet, dass** der Kollimator (2) in der Weise beschaffen ist, dass der Lichtstrahl (12) nach dem Durchgang durch den Kollimator (2) einen Durchmesser von ca. 12 mm aufweist.

8. Vorrichtung nach einem der vorangehenden Ansprüche 2 bis 7, **dadurch gekennzeichnet, dass** die Mittel (11,24,25) zur Abschwächung der Intensität des Lichtstrahls (12) so beschaffen sind, dass die Intensität des Lichtstrahls (12) nach dem Durchgang durch den Kollimator (2) in einem Bereich von ca. 1 mm um die optische Achse abgeschwächt ist.

9. Vorrichtung nach einem der vorangehenden Ansprüche, **dadurch gekennzeichnet, dass** die optische Sendeeinheit (1) Licht mit einer Wellenlänge von ca. 1064 nm oder von ca. 1550 nm aussendet.

10. Vorrichtung nach einem der vorangehenden Ansprüche, **dadurch gekennzeichnet, dass** es sich bei einer optischen Baugruppe (2,3,4,5,6,9) um ein Teleskop (9), insbesondere um ein Cassegrain-Teleskop handelt.

11. Vorrichtung nach einem der vorangehenden Ansprüche, **dadurch gekennzeichnet, dass** es sich bei einem Mittel (11,24,25) zur Abschwächung der Intensität des Lichtstrahls (12) um ein diffraktives optisches Element (24) handelt.

12. Vorrichtung nach einem der vorangehenden Ansprüche, **dadurch gekennzeichnet, dass** die Mittel(11,24,25) zur Abschwächung der Intensität des Lichtstrahls (12) so ausgebildet sind, dass die Intensität des abgeschwächten Lichtstrahls im Bereich, der optischen Achse geringer ist als die Intensität in den der optischen Achse in axialer Richtung ferner liegenden Bereichen.

## Claims

1. Transmitting device for optical signals, having an optical transmitting unit (1) and at least one optical assembly (2,3,4,5,6,9) for conditioning a light beam (12) emitted by the transmitting unit (1), wherein the device has means (11,24,25) for the attenuation of the intensity of the light beam (12) in the region of an optical axis of the device, wherein the device comprises a receiving unit (10) and in that a beam splitter (4) is present which divides the light paths in the device into
- a first partial light path which is traversed only by light emitted by the transmitting unit (1),
- a second partial light path which is traversed only by light to be received by the receiving unit (10),
- and a third partial light path which is traversed both by light to be received by the receiving unit (10) and by light emitted by the transmitting unit (1), with means (24,25) for the attenuation of the intensity of the light beam (12) being located in the first partial light path.

2. Device according to Claim 1, wherein the device has a collimator (2) for beam widening purposes as optical assembly in the direction of the light beam (12) emitted by the transmitting unit (1).

3. Device according to Claim 1 or 2, wherein the device has an eyepiece (6) in the direction of the light beam (12) emitted by the transmitting unit (1).

4. Device according to Claim 2, wherein a means (11,24,25) for the attenuation of the intensity of the light beam (12) is a reflecting layer (25) in the region of the optical axis of at least one optical element (21,22,23) of the collimator (2).

5. Device according to Claim 3, wherein a means (11,24,25) for the attenuation of the intensity of the light beam (12) is a light-absorbing optical element (11) in the region of the optical axis of at least one optical element (61,62,63) of the eyepiece (6).

6. Device according to Claim 5, wherein the light-absorbing element (11) is a light trap.

7. Device according to one of Claims 2 to 6, wherein the collimator (2) is designed such that, after the light beam (12) has passed through the collimator (2), it has a diameter of approximately 12 mm.

8. Device according to one of the preceding Claims 2 to 7, wherein the means (11,24,25) for the attenuation of the intensity of the light beam (12) are designed such that, after the light beam (12) has passed through the collimator (2), it is attenuated in a region of approximately 1 mm around the optical axis.

9. Device according to one of the preceding Claims, wherein the optical transmitting unit (1) emits light with a wavelength of approximately 1064 nm or of approximately 1550 nm.

10. Device according to one of the preceding Claims, wherein one optical assembly (2,3,4,5,6,9) is a telescope (9), in particular a Cassegrain telescope.

11. Device according to one of the preceding Claims, wherein the means (11,24,25) for the attenuation of the intensity of the light beam (12) is a diffractive optical element (24).

12. Device according to one of the preceding Claims, wherein the means (11,24,25) for the attenuation of the intensity of the light beam (12) are designed such that the intensity of the attenuated light beam in the region of the optical axis is lower than the intensity in the regions which are further away from the optical axis in the axial direction.

## Revendications

1. Dispositif pour transmettre des signaux optiques, comprenant une unité émettrice (1) ainsi qu'au moins un groupe optique (2, 3, 4, 5, 6, 9) destiné à conditionner un faisceau lumineux (12) émis par l'unité émettrice (1), le dispositif comportant des moyens (11, 24, 25) destinés à affaiblir l'intensité du faisceau lumineux (12) dans la région d'un axe optique du dispositif, **caractérisé en ce que** le dispositif comprend une unité réceptrice (10), et **en ce qu'**il est prévu un séparateur de faisceaux (4) qui divise les trajets de lumière dans le dispositif en
- un premier trajet de lumière partiel qui est exclusivement parcouru par de la lumière émise par l'unité émettrice (1),
- un deuxième trajet de lumière partiel qui est exclusivement parcouru par la lumière qui doit être reçue par l'unité réceptrice (10),
- un troisième trajet de lumière partiel qui est parcouru aussi bien par la lumière qui doit être reçue par l'unité réceptrice (10) que par la lumière émise par l'unité émettrice (1), des moyens (24, 25) destinés à affaiblir l'intensité du faisceau lumineux (12) se trouvant dans le premier trajet de lumière partiel.

2. Dispositif selon la revendication 1, **caractérisé en ce que** le dispositif comprend, comme groupe optique dans la direction du faisceau lumineux (12) émis par l'unité émettrice (1), un collimateur (2) destiné à élargir le faisceau.

3. Dispositif selon la revendication 1 ou 2, **caractérisé en ce que** le dispositif comprend un oculaire (6) dans la direction du faisceau lumineux (12) émis par l'unité émettrice (1).

4. Dispositif selon la revendication 2, **caractérisé en ce qu'**un moyen (11, 24, 25) destiné à affaiblir l'intensité du faisceau lumineux (12) est une couche réfléchissante (25) placée dans la région de l'axe optique d'au moins un élément optique (21, 22, 23) du collimateur (2).

5. Dispositif selon la revendication 3, **caractérisé en ce qu'**un moyen (11, 24, 25) destiné à affaiblir l'intensité du faisceau lumineux (12) est un élément optique (11) absorbant la lumière placé dans la région de l'axe optique d'au moins un élément optique (61, 62, 63) de l'oculaire (6).

6. Dispositif selon la revendication 5, **caractérisé en ce que** l'élément (11) absorbant la lumière est un piège à lumière.

7. Dispositif selon l'une des revendications 2 à 6, **caractérisé en ce que** le collimateur (2) est réalisé de telle manière qu'après avoir traversé le collimateur (2), le faisceau lumineux (12) présente un diamètre d'environ 12 mm.

8. Dispositif selon l'une des revendications précédentes 2 à 7, **caractérisé en ce que** les moyens (11, 24, 25) destinés à affaiblir l'intensité du faisceau lumineux (12) sont réalisés de telle manière qu'après la traversée du collimateur (2), l'intensité du faisceau lumineux est affaiblie dans une région d'environ 1 mm autour de l'axe optique.

9. Dispositif selon l'une des revendications précédentes, **caractérisé en ce que** l'unité optique émettrice (1) émet de la lumière d'une longueur d'onde d'environ 1064 nm ou d'environ 1550 nm.

10. Dispositif selon l'une des revendications précédentes, **caractérisé en ce qu'**un groupe optique (2, 3, 4, 5, 6, 9) est un télescope (9), en particulier un télescope Cassegrain.

11. Dispositif selon l'une des revendications précédentes, **caractérisé en ce qu'**un moyen (11, 24, 25) destiné à affaiblir l'intensité du faisceau lumineux (12) est un élément optique diffractant (24).

12. Dispositif selon l'une des revendications précédentes, **caractérisé en ce que** les moyens (11, 24, 25) destinés à affaiblir l'intensité du faisceau lumineux (12) sont constitués de telle manière que l'intensité du faisceau lumineux affaibli dans la région de l'axe optique est plus faible que l'intensité dans les régions situées plus loin de l'axe optique dans la direction axiale.
